# EUROPEAN PATENT SPECIFICATION

(11) **EP 4 383 995 B1**
(45) Date of publication and mention of the grant of the patent: **11.06.2025**
(21) Application number: 22786975.7
(22) Date of filing: 28.09.2022
(51) Int. Cl.: A01B 73/04, A01D 34/66, A01D 69/06

(54) **ARTICULATED APPARATUS**
GELENKVORRICHTUNG
APPAREIL ARTICULÉ

(30) Priority: 25.10.2021 GB 202115317
(43) Date of publication of application: 19.06.2024
(73) Proprietor: Wessex International Machinery, East Portway Industrial Estate Andover Hampshire SP10 3QN (GB)
(72) Inventor: WILLS, Paul, Andover, Hampshire SP10 3QN (GB); BROWNING, Charles, Andover, Hampshire SP10 3QN (GB); WOLFENDEN, Roy, Andover, Hampshire SP10 3QN (GB); HORSFIELD, Jack, Andover, Hampshire SP10 3QN (GB)
(74) Representative: Murgitroyd & Company
(86) International application number: PCT/GB2022/052452
(87) International publication number: WO 2023/073338

(56) References cited:
- US-A- 3 500 619
- US-A- 4 184 314
- US-A- 4 429 515
- US-A- 4 497 160
- US-A- 4 538 400
- US-A- 5 740 870
- US-A1- 2011 277 434

## Description

### Field of the Invention

The present invention relates to an articulated apparatus. More specifically, the present invention relates to an articulated apparatus with a body portion and a winged portion, wherein the articulated apparatus is for towing behind a vehicle.

### Background to the Invention

Articulated apparatus are common in industries such as agriculture, where such apparatus are often towed behind vehicles for use in fields and the like. For example, articulated apparatus often include mowers for cutting grass. Here, the use of articulated apparatus can be advantageous as, in use, the apparatus can extend over a large section of ground whilst retaining its ability to be stored in a compact manner. Generally, the articulated apparatus comprise a central body and one or more wings connected to the body. Generally, but not exclusively, the wings include the means by which the articulated apparatus performs its major function. For example, in the case of a mower, the wings may include cutting blades for cutting grass and other vegetation. These cutting blades or other active members are generally driven by a vehicle towing the articulated apparatus via a gearbox mounted on or within the articulated apparatus.

In order to avoid and or traverse obstacles on the ground, it is useful to be able to lift the portion of the articulated apparatus comprising the active members. However, if that portion is lifted too high while the active members are still working, this act can damage the gearbox or other aspects of the linkage between the gearbox and the active members. Also, lifting the active members too high while still working can be dangerous for other people near the articulated apparatus.

Objects and aspects of the present claimed invention seek to alleviate at least these problems with the prior art.

US 4,538,400, according to its abstract, discloses a rotary mower comprising a translatable main frame connectable to a towing vehicle having a power take-off unit connectable to a transmission carried by the main frame. At least one translatable wing frame is hingedly connected to an adjacent side of the main frame and is adapted to pivot selectively to a lower operative position and to an upper inoperative position. Depending cutter carrying shafts are supported for rotation on the main frame and the wing frame and are connected in driving relation with the transmission. An extensible drive shaft is operatively connected at one end to the depending shaft on the wing frame and a clutch operatively connects the other end of the extensible drive shaft to the transmission. An extensible clutch rod operatively connects the wing frame to a clutch actuator to move the clutch to an engaged position while the wing frame is in a lower operative position and to move the clutch to a disengaged position upon movement of the wing frame to an upper inoperative position. The wing frame is movable selectively to the lower operative position and to the upper inoperative position by a power unit.

US 4,429,515 discloses a self propelled lawn mower.

US 4,184,314 discloses a foldable tri-section vine fluffer.

US 4,497,160 discloses a mower with lateral extension wings.

US 3,500,619 discloses a sectionalised mower.

### Summary of the invention

According to a first aspect of the invention, there is provided an articulated apparatus As claimed in Claim 1.

In this way, the gearbox is decoupled from the active member such that it cannot jam, break or become otherwise damaged due to the elevation of the wing portion in the second position. Further, the active member is not driven when the wing portion is in the second position, increasing safety of the articulated apparatus.

It should be understood that the wing portion may be mounted directly or indirectly on the body portion, with the connection to the body portion not particularly limited. It should be understood that the wing portion may be mounted in any way such that the wing portion is substantially fixed to the body portion.

Preferably, the coupling system is a mechanical coupling system. The use of a mechanical system may be advantageous as it is more reliable than an electronic system. Additionally, the use of a mechanical coupling system may be more reliable than system that rely on pneumatic or hydraulic linkages. Additionally, a mechanical system may be advantageous in that it can be more easily maintained and services by a user.

The wing portion is locatable in an intermediate position wherein the wing portion is positioned between the first position and the second position, and the coupling system is configured to couple the gearbox with the active member when the wing portion is in the intermediate position. In this way, the wing portion can be raised to overcome obstacles without the active member being decoupled from the gearbox. Such a feature is of particular benefit when the articulated apparatus is traversing uneven ground or is working in an area with paths or other low level obstacles.

The coupling system comprises a blocking member and a first pin, the blocking member positionable in a first blocking position wherein the blocking member abuts the first pin and blocks motion of the wing portion from the intermediate position to the second position. Preferably, the blocking member comprises a first pin notch configured to removably retain the first pin. Preferably, the first pin notch is located proximate the end of the blocking member distal the body portion.

When the wing portion is in the intermediate position, the blocking member is configured to move substantially away from the wing portion to remove the blocking member from the first blocking position. In this way, the wing portion cannot be moved into the second position without intentional movement of the blocking member out of the blocking position. As such, the wing portion cannot be raised to the second position accidently, preventing damage of the gearbox and risk to persons and items close to the articulated apparatus.

Preferably, the coupling system comprises a coupling member coupled to the gearbox such that motion of the wing portion from the intermediate position to the second position decouples the gearbox from the active member and motion of the wing portion from the second position to the intermediate position couples the gearbox with the active member. Preferably, the coupling member is coupled to the gearbox via a pivoting member and the articulated apparatus is configured such that motion of the wing portion between the intermediate position and the second position pivotably rotates the pivoting member. In some embodiments, the pivoting member is substantially V-shaped. In some embodiments, the pivoting member is configured to pivot about the central axis of the pivoting member.

Preferably, the coupling system comprises a second pin configured to abut the coupling member when the wing portion is in the second position. Preferably, the coupling member comprises a guide surface and the articulated apparatus is configured such that the second pin is guided over the guide surface as the wing portion is moved between the intermediate position and the second position. Preferably, the guide surface abuts the first pin when the wing portion is positioned in the intermediate position. Preferably, the guide surface comprises a curved profile. Preferably, the guide surface extends substantially the length of the coupling member. Preferably, the guide surface is substantially smooth. Preferably, the guide surface is located on the surface of the coupling member located proximate the body portion. In this way, the coupling member rests on the first pin or second pin when no external forces are acting on the coupling member.

Preferably, the blocking member comprises a complementary surface and the articulated apparatus is configured such that the complementary surface and the guide surface are aligned or coplanar when the wing portion is in a third position, the third position located between the second position and the intermediate position. In this way, the first pin member abuts both the coupling member and the blocking member when the wing portion is in the third position such that greater control of the motion of the coupling member and blocking member is provided.

Preferably, the blocking member comprises a second blocking position wherein the articulated apparatus is configured such that the second pin abuts the blocking member and blocks motion of the wing portion from the second position to the intermediate position. Preferably, the blocking member comprises a second pin notch configured to removably retain the second pin. Preferably, the second pin notch is located proximate the end of the blocking member distal the first pin notch.

Preferably, the coupling member is fixed along a first axis and the blocking member is pivotably fixed along the first axis. Preferably, an elongate member extends along the first axis and the pivoting member is fixed to the elongate member. In this way, as the wing portion is raised to the second position, the movement of the coupling member causes rotation of the elongate member. Rotation of the elongate member causes the pivoting member to pivot, thereby coupling and decoupling the gearbox with the active member.

Preferably, the first pin and the second pin are at a fixed distance relative to one another. Preferably, the first pin and the second pin are located on a pin member. Preferably, the pin member is attached at a first end to the wing portion and a second end is pivotably fixed to the body portion, such that motion of the wing portion pivotably rotates the pin member. In some embodiments, the pin member comprises a substantially triangular portion.

In some embodiments, the articulated apparatus comprises at least two wing portions. More preferably, the articulated apparatus comprises a pair of wing portions mounted on opposing sides of the body portion. Preferably the wing portions are substantially identical. More preferably the wing portions are operated independently of each other.

Preferably, the gearbox is mounted on or within the body portion. Such a configuration may allow for a simplified mechanical arrangement, especially where the articulated apparatus comprises multiple wing portions.

Preferably, the active member comprises a cutting blade. Preferably, the active member comprises a mower blade.

Preferably, the articulated apparatus is a mower.

### Detailed Description

Embodiments of the present invention will now be described by way of example only and with reference to the accompanying drawings, in which:
Figure 1 depicts a view of an articulated apparatus in accordance with the first aspect of the present invention, the articulated apparatus shown with the wing portion in the intermediate position and the blocking member in the blocking position;
Figure 2 depicts a view of the articulated apparatus of Figure 1 with the wing portion in the intermediate position and the blocking member removed from the blocking position;
Figure 3 depicts a view of the articulated apparatus of Figure 1 with the wing portion in the third position;
Figure 4 depicts a view of the articulated apparatus of Figure 1 with the wing portion positioned between the third position and the second position;
Figure 5 depicts a view of the articulated apparatus of Figure 1 with the wing portion in the second position; and
Figure 6 depicts a second view of the articulated apparatus of Figure 1 with the wing portion in the second position.

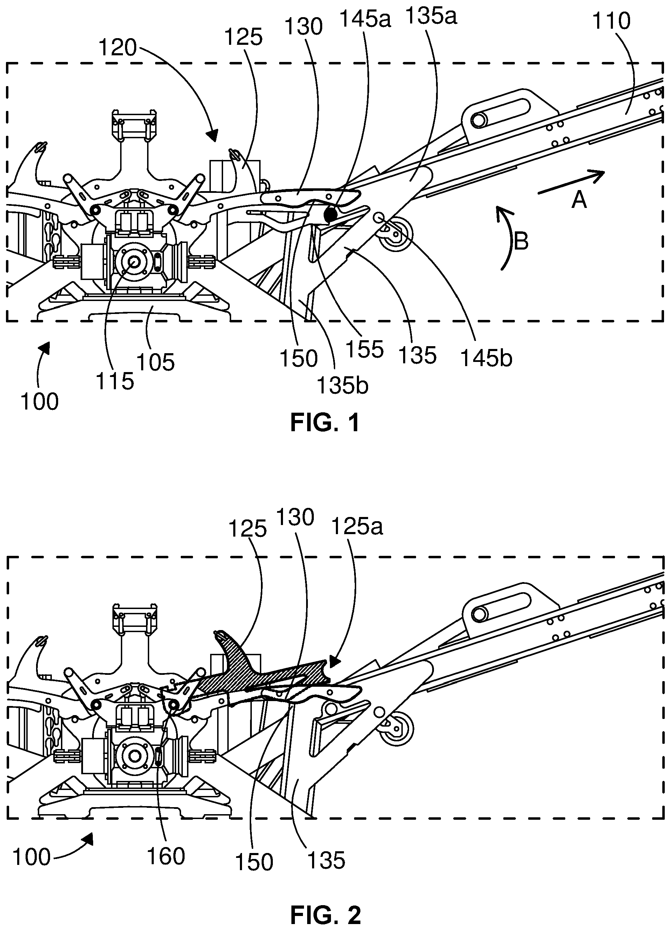

With reference to Figures 1 to 6, there is illustrated an articulated apparatus 100 comprising a body portion 105 and a wing portion 110, the wing portion 110 comprising an active member (not pictured) located in direction A on the wing portion 110. It is envisaged the active member may be any suitable tooling or apparatus driven by a drive source, such as a cutting blade. The wing portion 110 is mounted on the body portion 105.

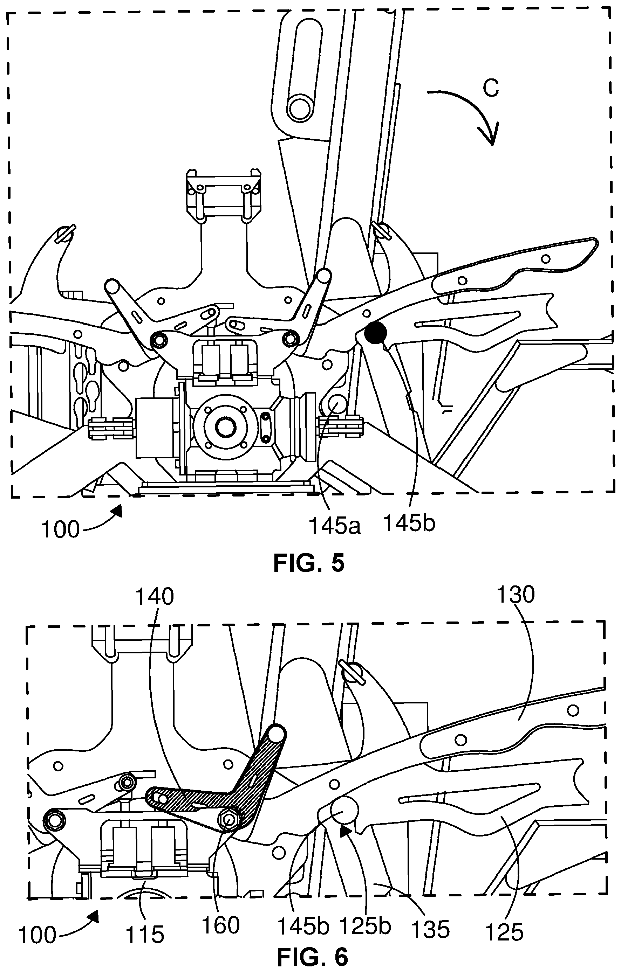

The wing portion 110 is moveable between a first position (not shown) and a second position (shown in Figures 5 and 6). The articulated apparatus 100 includes a gearbox 115 configured to transmit drive from a drive source to the active member. The articulated apparatus 100 further includes a mechanical coupling system 120, the coupling system 120 configured to couple the gearbox 115 with said active member when the wing portion 110 is in the first position, and to decouple the gearbox 115 from the active member when the wing portion 110 is in the second position.

The coupling system 120 comprises a blocking member 125, a coupling member 130, a pivoting member 140 and a pin member 135. The pin member 135 comprises a substantially triangular portion upon which is located a first pin 145a and a second pin 145b. The first pin 145a is located between the body portion 105 and the second pin 145b when the wing portion 110 is in the first position. The first pin 145a and the second pin 145b are at a fixed distance relative to one another on the pin member 135. The pin member 135 is attached at a first end 135a to the wing portion and a second end 135b of the pin member 135 is pivotably fixed to the body portion 105, such that motion of the wing portion 110 pivotably rotates the pin member 135.

The wing portion 110 can be located in an intermediate position, as illustrated in Figures 1 and 2, wherein the wing portion 110 is positioned between the first position and the second position. In the intermediate position, the coupling system 120 is configured to couple the gearbox 115 with the active member. To move the wing portion 110 from the first position to the second position, the wing portion is rotated in direction B, as illustrated in Figure 1. To move the wing portion 110 from the second position to the first position, the wing portion is rotated in direction C, as illustrated in Figure 5.

The blocking member 125 can be positioned a first blocking position, as illustrated in Figure 1, wherein the blocking member 125 abuts the first pin 145a and blocks motion of the wing portion 110 from the intermediate position to the second position. The blocking member 125 comprises a first pin notch 125a configured to removably retain the first pin 145a. The first pin notch 125a is located proximate the end of the blocking member 125 distal the body portion 105.

When the wing portion 110 is in the intermediate position, the blocking member 125 is moved substantially away from the wing portion 110, in direction B, to remove the blocking member 125 from the first blocking position, as shown in Figure 2. In this way, the wing portion cannot be moved into the second position without intentional movement of the blocking member out of the blocking position.

The coupling member 130 is coupled to the gearbox 115 such that motion of the wing portion 110 from the intermediate position to the second position decouples the gearbox 115 from the active member and motion of the wing portion 110 from the second position to the intermediate position couples the gearbox 115 with the active member. The coupling member 130 is connected or coupled to the gearbox 115 via the pivoting member 140. Motion of the wing portion 110 between the intermediate position and the second position pivotably rotates the pivoting member 140. As shown in Figure 6, the pivoting member 140 is connected to a portion of the gearbox 115 such that rotation of the pivoting member 140 decouples the gearbox 115 from the active member.

The second pin 145b is configured to abut the coupling member 130 when the wing portion 110 is in the second position, as illustrated in Figures 5 and 6. The coupling member 130 comprises a guide surface 150 and the second pin 145b is guided over the guide surface 150 as the wing portion 110 is moved between the intermediate position and the second position, in direction B. The guide surface 150 abuts the first pin 145a when the wing portion 110 is positioned in the intermediate position, as shown in Figures 1 and 2. The guide surface 150 comprises a curved profile, and so as the first pin 145a is guided over the guide surface 150, the distance between the coupling member 130 and the wing portion 110 varies. As such, the motion of the coupling member 130 and pivoting member 140 relative to the position of the wing portion 110 can be controlled through modification of the profile of the guide surface 150. In this way, the profile of the guide surface 150 can be selected to suit the desired use. The guide surface 150 extends substantially the length of the coupling member 130 and is substantially smooth. The guide surface 150 is located on the surface of the coupling member 130 located proximate the body portion 105.

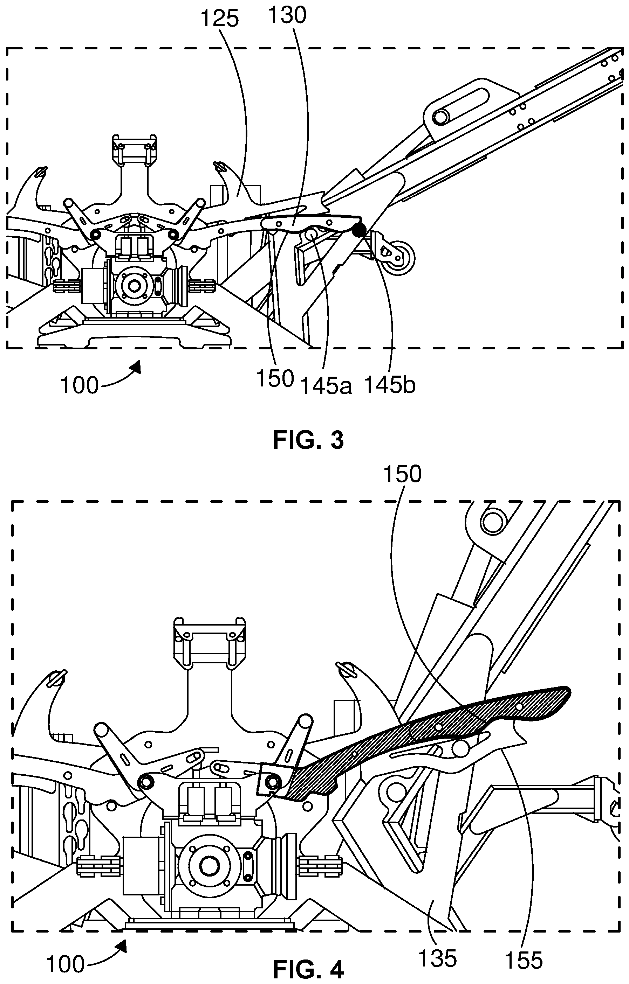

The blocking member 125 comprises a complementary surface 155 and the complementary surface 155 and the guide surface 150 are aligned or coplanar when the wing portion is in a third position, as illustrated in Figure 3. The third position is located between the second position and the intermediate position. The first pin member 135a abuts both the coupling member 130 and the blocking member 125 when the wing portion 110 is in the third position.

The blocking member 125 can be located in a second blocking position, as illustrated in Figures 5 and 6, wherein the second pin 145b abuts the blocking member 125 and blocks motion of the wing portion 110 in direction C, from the second position to the intermediate position. The blocking member 125 comprises a second pin notch 125b configured to removably retain the second pin 145b. The second pin notch 125b is located proximate the end of the blocking member 125 distal the first pin notch 125a.

The coupling member 130 is fixed along a first axis 160, the first axis perpendicular to the plane of Figures 1-6, such that the first axis 160 extends perpendicularly into the page. The blocking member 125 is pivotably fixed to an elongate member extending along the first axis 160 and both the blocking member 125 and the pivoting member 140 are fixed to the elongate member. In this way, rotation of the elongate member is directly translated into rotation of the coupling member 130 and the pivoting member 140. As such, when the wing portion 110 is raised in direction B to the second position, the movement of the coupling member 130 causes rotation of the elongate member and rotation of the elongate member causes the pivoting member 140 to pivot, thereby coupling and decoupling the gearbox 115 with the active member.

Further embodiments within the scope of the present invention may be envisaged that have not been described above, for example, it is envisaged that alternative shaped blocking members, coupling members and pivoting members can be provided to better suit the desired application, provided they fall within the scope of the appended claims.

The invention is not limited to the specific examples or structures illustrated; a greater number of components than are illustrated in the figures could be used, for example.

## Claims

1. An articulated apparatus (100), said articulated apparatus (100) comprising;
a body portion (105), and
a wing portion (110), said wing portion (110) comprising an active member,
said wing portion (110) mounted on said body portion (105), said wing portion (110) moveable between a first position and a second position,
said articulated apparatus (100) further comprising a gearbox (115) configured to transmit drive from a drive source to said active member,
wherein said articulated apparatus (100) comprises a coupling system (120), said coupling system (120) configured to couple said gearbox (115) with said active member when said wing portion (110) is in said first position, and to decouple said gearbox (115) from said active member when said wing portion (110) is in said second position,
wherein said wing portion (110) is locatable in an intermediate position wherein said wing portion (110) is positioned between said first position and said second position, and said coupling system (120) is configured to couple said gearbox (115) with said active member when said wing portion (110) is in said intermediate position,
wherein said coupling system (120) comprises a blocking member (125) and a first pin (145a), said blocking member (125) positionable in a first blocking position wherein said blocking member (125) abuts said first pin (145a) and blocks motion of said wing portion (110) from said intermediate position to said second position,
**characterised in that**
when said wing portion (110) is in said intermediate position, said blocking member (125) is configured to move substantially away from said wing portion (110) to remove said blocking member (125) from said first blocking position.

2. The articulated apparatus (100) of claim 1, wherein said coupling system (120) is a mechanical coupling system.

3. The articulated apparatus (100) of claim 1 or claim 2, wherein said coupling system (120) comprises a coupling member (130) coupled to said gearbox (115) such that motion of said wing portion (110) from said intermediate position to said second position decouples said gearbox (115) from said active member and motion of said wing portion (110) from said second position to said intermediate position couples said gearbox (115) with said active member.

4. The articulated apparatus (100) of claim 3, wherein said coupling member (130) is coupled to said gearbox (115) via a pivoting member (140) and said articulated apparatus (100) is configured such that motion of said wing portion (110) between said intermediate position and said second position pivotably rotates said pivoting member (140).

5. The articulated apparatus (100) of claim 3 or claim 4, wherein said coupling system (120) comprises a second pin configured to abut said coupling member (130) when said wing portion (110) is in said second position.

6. The articulated apparatus (100) of claim 5, wherein said coupling member (130) comprises a guide surface and said articulated apparatus (100) is configured such that said second pin is guided over said guide surface as said wing portion (110) is moved between said intermediate position and said second position.

7. The articulated apparatus (100) of claim 6, wherein said guide surface abuts said first pin (145a) when said wing portion (110) is positioned in said intermediate position.

8. The articulated apparatus (100) of claim 6 or claim 7, wherein said guide surface (150) comprises a curved profile.

9. The articulated apparatus (100) of any one of claims 6 to 8, wherein said blocking member (125) comprises a complementary surface (155) and said articulated apparatus (100) is configured such that said complementary surface (155) and said guide surface (150) are aligned when said wing portion (110) is in a third position, said third position located between said second position and said intermediate position.

10. The articulated apparatus (100) of any one of claims 5 to 9, wherein said blocking member (125) is locatable in a second blocking position wherein said articulated apparatus (100) is configured such that said second pin abuts said blocking member and blocks motion of said wing portion (110) from said second position to said intermediate position.

11. The articulated apparatus (100) of any one of claims 3 to 10, wherein said coupling member (130) is fixed along a first axis (160) and said blocking member (125) is pivotably fixed along said first axis (160).

12. The articulated apparatus (100) of any one of claims 5 to 11, wherein, during use of said articulated apparatus (100), said first pin (145a) and said second pin (145b) remain at a constant distance relative to one another.

13. The articulated apparatus (100) of claim 12, wherein said first pin (145a) and said second pin (145b) are located on a pin member (135).

14. The articulated apparatus (100) of claim 13, wherein said pin member (135) is attached at a first end (135a) to said wing portion (110) and a second end (135b) is pivotably fixed to said body portion (105), such that said articulated apparatus (100) is configured such that motion of said wing portion (110) pivotably rotates said pin member (135).

15. The articulated apparatus (100) of any one preceding claim, wherein said articulated apparatus (100) is a mower.

## Patentansprüche

1. Eine Gelenkvorrichtung (100), wobei die Gelenkvorrichtung (100) Folgendes beinhaltet:
einen Körperabschnitt (105), und
einen Flügelabschnitt (110), wobei der Flügelabschnitt (110) ein aktives Element beinhaltet,
wobei der Flügelabschnitt (110) auf dem Körperabschnitt (105) befestigt ist, wobei der Flügelabschnitt (110) zwischen einer ersten Position und einer zweiten Position bewegbar ist,
wobei die Gelenkvorrichtung (100) ferner ein Getriebegehäuse (115) beinhaltet, das konfiguriert ist, um Antrieb von einer Antriebsquelle zu dem aktiven Element zu übertragen,
wobei die Gelenkvorrichtung (100) ein Kopplungssystem (120) beinhaltet, wobei das Kopplungssystem (120) konfiguriert ist, um das Getriebegehäuse (115) mit dem aktiven Element zu koppeln, wenn sich der Flügelabschnitt (110) in der ersten Position befindet, und das Getriebegehäuse (115) von dem aktiven Element zu entkoppeln,
wenn sich der Flügelabschnitt (110) in der zweiten Position befindet,
wobei der Flügelabschnitt (110) in einer Zwischenposition lokalisiert werden kann,
wobei der Flügelabschnitt (110) zwischen der ersten Position und der zweiten Position positioniert ist und das Kopplungssystem (120) konfiguriert ist, um das Getriebegehäuse (115) mit dem aktiven Element zu koppeln, wenn sich der Flügelabschnitt (110) in der Zwischenposition befindet,
wobei das Kopplungssystem (120) ein Blockierungselement (125) und einen ersten Stift (145a) beinhaltet, wobei das Sperrelement (125) in einer ersten Blockierungsposition positioniert werden kann, wobei das Blockierungselement (125) an den ersten Stift (145a) stößt und Bewegung des Flügelabschnitts (110) von der Zwischenposition in die zweite Position blockiert,
**dadurch gekennzeichnet, dass**,
wenn sich der Flügelabschnitt (110) in der Zwischenposition befindet, das Blockierungselement (125) konfiguriert ist, um sich im Wesentlichen weg von dem Flügelabschnitt (110) zu bewegen, um das Blockierungselement (125) aus der ersten Blockierungsposition zu entfernen.

2. Gelenkvorrichtung (100) gemäß Anspruch 1, wobei das Kopplungssystem (120) ein mechanisches Kopplungssystem ist.

3. Gelenkvorrichtung (100) gemäß Anspruch 1 oder Anspruch 2, wobei das Kopplungssystem (120) ein Kopplungsselement (130) beinhaltet, das so mit dem Getriebegehäuse (115) gekoppelt ist, dass Bewegung des Flügelabschnitts (110) von der Zwischenposition zu der zweiten Position das Getriebegehäuse (115) von dem aktiven Element entkoppelt und Bewegung des Flügelabschnitts (110) von der zweiten Position in die Zwischenposition das Getriebegehäuse (115) mit dem aktiven Element koppelt.

4. Gelenkvorrichtung (100) gemäß Anspruch 3, wobei das Kopplungselement (130) über ein Schwenkelement (140) mit dem Getriebegehäuse (115) gekoppelt ist und die Gelenkvorrichtung (100) so konfiguriert ist, dass Bewegung des Flügelabschnitts (110) zwischen der Zwischenposition und der zweiten Position das Schwenkelement (140) schwenkbar dreht.

5. Gelenkvorrichtung (100) gemäß Anspruch 3 oder Anspruch 4, wobei das Kupplungssystem (120) einen zweiten Stift beinhaltet, der konfiguriert ist, um an das Kopplungselement (130) zu stoßen, wenn sich der Flügelabschnitt (110) in der zweiten Position befindet.

6. Gelenkvorrichtung (100) gemäß Anspruch 5, wobei das Kopplungselement (130) eine Führungsoberfläche beinhaltet und die Gelenkvorrichtung (100) so konfiguriert ist, dass der zweite Stift über die Führungsoberfläche geführt wird, während der Flügelabschnitt (110) zwischen der Zwischenposition und der zweiten Position bewegt wird.

7. Gelenkvorrichtung (100) gemäß Anspruch 6, wobei die Führungsoberfläche an den ersten Stift (145a) stößt, wenn der Flügelabschnitt (110) in der Zwischenposition positioniert ist.

8. Gelenkvorrichtung (100) gemäß Anspruch 6 oder Anspruch 7, wobei die Führungsoberfläche (150) ein gekrümmtes Profil beinhaltet.

9. Gelenkvorrichtung (100) gemäß einem der Ansprüche 6 bis 8, wobei das Blockierungselement (125) eine komplementäre Oberfläche (155) beinhaltet und die Gelenkvorrichtung (100) so konfiguriert ist, dass die komplementäre Oberfläche (155) und die Führungsoberfläche (150) ausgerichtet sind, wenn sich der Flügelabschnitt (110) in einer dritten Position befindet, wobei die dritte Position zwischen der zweiten Position und der Zwischenposition lokalisiert ist.

10. Gelenkvorrichtung (100) gemäß einem der Ansprüche 5 bis 9, wobei das Blockierungselement (125) in einer zweiten Blockierungsposition lokalisiert werden kann, wobei die Gelenkvorrichtung (100) so konfiguriert ist, dass der zweite Stift gegen das Blockierungselement stößt und Bewegung des Flügelabschnitts (110) von der zweiten Position in die Zwischenposition blockiert.

11. Gelenkvorrichtung (100) gemäß einem der Ansprüche 3 bis 10, wobei das Kupplungselement (130) entlang einer ersten Achse (160) fixiert ist und das Blockierungselement (125) schwenkbar entlang der ersten Ache (160) fixiert ist.

12. Gelenkvorrichtung (100) gemäß einem der Ansprüche 5 bis 11, wobei, während der Verwendung der Gelenkvorrichtung (100), der erste Stift (145a) und der zweite Stift (145b) relativ zueinander an einem konstanten Abstand verbleiben.

13. Gelenkvorrichtung (100) gemäß Anspruch 12, wobei der erste Stift (145a) und der zweite Stift (145b) auf einem Stiftelement (135) lokalisiert sind.

14. Gelenkvorrichtung (100) gemäß Anspruch 13, wobei das Stiftelement (135) an einem ersten Ende (135a) an dem Flügelabschnitt (110) angebracht ist und ein zweites Ende (135b) schwenkbar so an dem Körperabschnitt (105) fixiert ist, dass die Gelenkvorrichtung (100) so konfiguriert ist, dass die Bewegung des Flügelabschnitts (110) das Stiftelement (135) schwenkbar dreht.

15. Gelenkvorrichtung (100) gemäß einem der vorhergehenden Ansprüche, wobei die Gelenkvorrichtung (100) ein Mäher ist.

## Revendications

1. Un appareil articulé (100), ledit appareil articulé (100) comprenant :
une portion formant corps (105), et
une portion formant aile (110), ladite portion formant aile (110) comprenant un élément actif,
ladite portion formant aile (110) étant montée sur ladite portion formant corps (105),
ladite portion formant aile (110) pouvant être déplacée entre une première position et une deuxième position,
ledit appareil articulé (100) comprenant en outre une boîte d'engrenages (115) configurée pour transmettre un entraînement d'une source d'entraînement audit élément actif,
ledit appareil articulé (100) comprenant un système de couplage (120), ledit système de couplage (120) étant configuré pour coupler ladite boîte d'engrenages (115) avec ledit élément actif lorsque ladite portion formant aile (110) est dans ladite première position, et pour découpler ladite boîte d'engrenages (115) dudit élément actif lorsque ladite portion formant aile (110) est dans ladite deuxième position,
dans lequel ladite portion formant aile (110) peut être située dans une position intermédiaire dans laquelle ladite portion formant aile (110) est positionnée entre ladite première position et ladite deuxième position, et ledit système de couplage (120) est configuré pour coupler ladite boîte d'engrenages (115) avec ledit élément actif lorsque ladite portion formant aile (110) est dans ladite position intermédiaire,
dans lequel ledit système de couplage (120) comprend un élément de blocage (125) et une première goupille (145a), ledit élément de blocage (125) pouvant être positionné dans une première position de blocage dans laquelle ledit élément de blocage (125) bute contre ladite première goupille (145a) et bloque un mouvement de ladite portion formant aile (110) de ladite position intermédiaire à ladite deuxième position,
**caractérisé en ce que**
lorsque ladite portion formant aile (110) est dans ladite position intermédiaire, ledit élément de blocage (125) est configuré pour se déplacer substantiellement à l'écart de ladite portion formant aile (110) afin de retirer ledit élément de blocage (125) de ladite première position de blocage.

2. L'appareil articulé (100) de la revendication 1, dans lequel ledit système de couplage (120) est un système de couplage mécanique.

3. L'appareil articulé (100) de la revendication 1 ou de la revendication 2, dans lequel ledit système de couplage (120) comprend un élément de couplage (130) couplé à ladite boîte d'engrenages (115) de telle sorte qu'un mouvement de ladite portion formant aile (110) de ladite position intermédiaire à ladite deuxième position découple ladite boîte d'engrenages (115) dudit élément actif et un mouvement de ladite portion formant aile (110) de ladite deuxième position à ladite position intermédiaire couple ladite boîte d'engrenages (115) avec ledit élément actif.

4. L'appareil articulé (100) de la revendication 3, dans lequel ledit élément de couplage (130) est couplé à ladite boîte d'engrenages (115) par l'intermédiaire d'un élément pivotant (140) et ledit appareil articulé (100) est configuré de telle sorte qu'un mouvement de ladite portion formant aile (110) entre ladite position intermédiaire et ladite deuxième position fait tourner de façon qu'il puisse pivoter ledit élément pivotant (140).

5. L'appareil articulé (100) de la revendication 3 ou de la revendication 4, dans lequel ledit système de couplage (120) comprend une deuxième goupille configurée pour buter contre ledit élément de couplage (130) lorsque ladite portion formant aile (110) est dans ladite deuxième position.

6. L'appareil articulé (100) de la revendication 5, dans lequel ledit élément de couplage (130) comprend une surface de guidage et ledit appareil articulé (100) est configuré de telle sorte que ladite deuxième goupille est guidée sur ladite surface de guidage à mesure que ladite portion formant aile (110) est déplacée entre ladite position intermédiaire et ladite deuxième position.

7. L'appareil articulé (100) de la revendication 6, dans lequel ladite surface de guidage bute contre ladite première goupille (145a) lorsque ladite portion formant aile (110) est positionnée dans ladite position intermédiaire.

8. L'appareil articulé (100) de la revendication 6 ou de la revendication 7, dans lequel ladite surface de guidage (150) comprend un profil incurvé.

9. L'appareil articulé (100) de l'une quelconque des revendications 6 à 8, dans lequel ledit élément de blocage (125) comprend une surface complémentaire (155) et ledit appareil articulé (100) est configuré de telle sorte que ladite surface complémentaire (155) et ladite surface de guidage (150) sont alignées lorsque ladite portion formant aile (110) est dans une troisième position, ladite troisième position étant située entre ladite deuxième position et ladite position intermédiaire.

10. L'appareil articulé (100) de l'une quelconque des revendications 5 à 9, dans lequel ledit élément de blocage (125) peut être situé dans une deuxième position de blocage dans laquelle ledit appareil articulé (100) est configuré de telle sorte que ladite deuxième goupille bute contre ledit élément de blocage et bloque un mouvement de ladite portion formant aile (110) de ladite deuxième position à ladite position intermédiaire.

11. L'appareil articulé (100) de n'importe laquelle des revendications 3 à 10, dans lequel ledit élément de couplage (130) est fixé le long d'un premier axe (160) et ledit élément de blocage (125) est fixé de façon qu'il puisse pivoter le long dudit premier axe (160).

12. L'appareil articulé (100) de l'une quelconque des revendications 5 à 11, dans lequel, pendant l'utilisation dudit appareil articulé (100), ladite première goupille (145a) et ladite deuxième goupille (145b) restent à une distance constante l'une par rapport à l'autre.

13. L'appareil articulé (100) de la revendication 12, dans lequel ladite première goupille (145a) et ladite deuxième goupille (145b) sont situées sur un élément de goupille (135).

14. L'appareil articulé (100) de la revendication 13, dans lequel ledit élément de goupille (135) est attaché au niveau d'une première extrémité (135a) à ladite portion formant aile (110) et une deuxième extrémité (135b) est fixée de façon qu'elle puisse pivoter à ladite portion formant corps (105), de telle sorte que ledit appareil articulé (100) est configuré de telle sorte qu'un mouvement de ladite portion formant aile (110) fait tourner de façon qu'il puisse pivoter ledit élément de goupille (135).

15. L'appareil articulé (100) d'une quelconque revendication précédente, dans lequel ledit appareil articulé (100) est une faucheuse.
